# EUROPÄISCHE PATENTSCHRIFT

(11) **EP 3 960 963 B1**
(45) Veröffentlichungstag und Bekanntmachung des Hinweises auf die Patenterteilung: **18.10.2023**
(21) Anmeldenummer: 20193375.1
(22) Anmeldetag: 28.08.2020
(51) Int. Cl.: E04F 21/18, B25B 23/10

(54) **ZENTRIERHÜLSE UND VERFAHREN ZUR BEFESTIGUNG**
CENTRING SLEEVE AND METHOD FOR FIXING
DOUILLE DE CENTRAGE ET PROCÉDÉ DE FIXATION

(43) Veröffentlichungstag der Anmeldung: 02.03.2022
(73) Patentinhaber: SFS Group International AG, 9435 Heerbrugg (CH)
(72) Erfinder: Pöltinger, Yves, 9430 St. Margrethen (CH); Mair, Roland, 6840 Götzis Vorarlberg (AT)

(56) Entgegenhaltungen:
- EP-A1- 0 477 707
- EP-A1- 3 366 934
- WO-A1-03/026823
- US-A- 1 052 237

## Beschreibung

Die vorliegende Erfindung befasst sich mit einer Zentrierhülse zur genauen Positionierung von Befestigern bei der Montage von Bauteilen, speziell von Fassadenplatten an einer Unterkonstruktion einer Gebäudehülle. Ferner wird ein korrespondierendes Verfahren beschrieben.

### HINTERGRUND

Im Bauwesen werden heute vor allem beim Büro- und Gewerbebau funktionelle Gebäudehüllen geschaffen, die hohe Anforderungen in punkto Sicherheit, Transparenz, Isolation, aber auch Design und Wartbarkeit erfüllen müssen. Speziell bei anspruchsvoller Architektur muss die technische Befestigung von Fassadenelementen so erfolgen, dass das Gesamtbild des Gebäudes nicht negativ beeinträchtigt wird.

Als Fassadenelemente werden dabei häufig farblich behandelte plattenförmige Bauteile mit und ohne Oberflächenstrukturen verwendet; aus Materialien wie Faserzement, Holz, HPL (high pressure laminate - Papierlagen mit Kunststoff), Kunststoffen, Leichtmetall und Verbindungen bzw. Laminate dieser Materialien. Die Dicke dieser Platten beträgt üblicherweise zwischen 4 und 12 mm, je nach Material und Grösse des Elementes und Art der Befestigung. Die Fassadenelemente werden üblicherweise als letztes, sichtbares Element der Gebäudehülle auf einer Unterkonstruktion befestigt, häufig auf einem Gitter oder Raster aus Leichtmetallprofilen.

Eine weit verbreitete Befestigungsart für solche Fassadenelemente ist die sichtbare Verschraubung, bei der die Schraubenköpfe als Fassadenbestandteil sichtbar bleiben. Unabhängig von der Befestigungsart muss jedoch berücksichtigt werden, dass die Fassadenelemente und die Unterkonstruktion unterschiedlichen thermischen Belastungen unterliegen, unterschiedliche Ausdehnungskoeffizienten haben können und daher sich unterschiedlich ausdehnen. Verspannungen der Fassadenelemente untereinander bzw. zwischen Fassadenelement und Unterkonstruktion können aber Materialermüdung hervorrufen.

Dieses Problem wird häufig so gelöst, dass die Fassadenelemente zur Befestigung Durchgangsbohrungen aufweisen, deren Durchmesser grösser gewählt wird als der nominelle Aussendurchmesser des Gewindes der Befestigungsschrauben. Dadurch hat jedes Fassadenelement Spiel in seiner Befestigungsebene. Der Kopfdurchmesser der Schrauben muss konsequenterweise deutlich grösser gewählt werden als der Durchmesser der Bohrungen im Fassadenelement, um das Fassadenelement sicher am Ort halten zu können.

Damit entsteht jedoch bei der Montage der Befestigungselemente das Problem, dass die überdimensionierte Bohrung im Fassadenelement der Schraube beim Setzen keine Führung bieten kann und somit ein Verkippen oder Versetzen der Schraube möglich ist - was wiederum das angestrebte Ziel der "Befestigung mit Spiel" gefährden würde. Diese Gefahr wird zusätzlich dadurch vergrössert, dass zur Montage häufig selbstbohrende und selbstschneidende Schrauben verwendet werden, die ohne Vorbohren in der metallenen Unterkonstruktion gesetzt werden können. Dabei ist ein entsprechend hoher Kraftaufwand nötig ist, bis die Bohrspitze bzw. das Gewinde greift.

### STAND DER TECHNIK

Im Stand der Technik wird dieses Problem beispielsweise so gelöst, dass in die weite Durchgangsbohrung des Fassadenelementes eine Hülse mit einem flanschartigen Kragen und einem Boden eingesetzt wird. Der Aussendurchmesser der Hülse (ohne Kragen) entspricht dabei im Wesentlichen dem Bohrungsdurchmesser im Fassadenelement und die Länge der Hülse der Dicke des Fassadenelementes. Der Boden kann ein mittiges Loch, eine Vertiefung oder eine mittig angeordnete Soll-Durchbruchstelle aufweisen, die für eine angesetzte Schraube eine Zentrierung erlaubt. Je nachdem, wie gross der freie Innendurchmesser der Hülse ist, kann auch eine Führungswirkung für die Schraube erreicht werden. Der Kragen der Hülse hat im endmontierten Zustand zudem eine dichtende wie auch dämpfende Wirkung, weil der Schraubenkopf auf dem Kragen wie auf einer Unterlagscheibe aufliegt. Nachteilig ist, dass für jeden Bohrungsdurchmesser in der Fassade und für jede Fassadenplattenstärke eine entsprechend ausgelegte Hülse vorgesehen werden muss.

Alternativ schlägt die Schrift WO 03/026823A1 vor, eine zylindrische Führungshülse zu verwenden, die auf die Spitze einer Schraube aufgeschoben, -gedreht oder -gesteckt wird und selbst eine konische Spitze aufweist, die in dieselbe Richtung zielt wie die Schraubenspitze. Diese konische Spitze zentriert eine - üblicherweise - Senkkopfschraube in einem angesenkten Bohrloch und sorgt dafür, dass der Schraubenkopf fluchtend in der Oberfläche versenkt werden kann. Diese Hülse wird, wenn das Gewinde der Schraube im Untergrund gegriffen hat und der Unterseite des Schraubenkopfes an der Oberkante der Hülse anschlägt, entlang einer längsachsparallelen Sollbruchstelle aufgetrennt und ausgeworfen. Im Bohrloch verbleibt kein Rest der Hülse.

Eine Weiterentwicklung dieses Prinzips zeigt die EP 3 366 934 A1, die nicht nur für konisch angesenkte Bohrlöcher funktioniert, sondern spezifisch für die Anwendung bei Fassadenelementen ausgelegt wurde. Eine mit längsachsparallelen Sollbruchstellen ausgestattete Führungshülse wird in das Bohrloch gesteckt und dort mit Hilfe eines Anschlages bzw. Führungselementen nur am Bohrlochrand gehalten. Eine konische, trichterförmige Öffnung am anderen Hülsenende sorgt dafür, dass ungeachtet der Kopfform eine Schraube die Hülse aufgesprengt wird und seitlich radial wegbricht sobald die Schraube eine gewisse Setztiefe erreicht hat.

In der Praxis hat sich gezeigt, dass bei solchermassen ausgelegten Zentrierhülsen ein Restrisiko besteht, dass Hülsenreste sich im Bohrloch verfangen. Dies kann insbesondere dann auftreten, wenn die Schraube beim Setzen einen hohen Vorschub aufweist und die Hülsenreste nicht schnell genug seitlich ausgeworfen werden.

Die vorliegende Erfindung hat daher die Aufgabe, diese Nachteile des Standes der Technik zu vermeiden, insbesondere eine sichere und einfache Montage von Fassadenelemente der beschriebenen Gattung zu ermöglichen und eine zentrierte und geführte Montage der Befestigungsschraube zu gestatten.

### BESCHREIBUNG DER ERFINDUNG

Dies wird durch eine Zentrierhülse bzw. gemäss den Merkmalen des unabhängigen Vorrichtungsanspruchs bzw. durch einen Montagevorgang gemäss den Schritten des Verfahrensanspruches erzielt. Die abhängigen Merkmale beschreiben nützliche Varianten und Weiterbildungen der Erfindung.

Die erfindungsgemässe Hülse ist, wie die entsprechenden Hülsen im Stand der Technik, ein nur am Beginn der Montage einzusetzendes, nur einmal zu verwendendes Produkt, das einen Befestiger kurzzeitig stabilisiert (zentriert und führt) und beim weiteren Eintreiben des Befestigers aufgebrochen wird und dem finalen Einschraubvorgang nicht mehr im Wege steht. Durch eine besondere Gestaltung der Hülse sowie eine daraus resultierende besondere Prozessführung werden die Nachteile des Standes der Technik vermieden.

Eine erfindungsgemässe Hülse dient zur Zentrierung von Befestigern bei der Montage von Bauteilen an der Unterkonstruktion einer Gebäudehülle. Sie umfasst einen im Wesentlichen hohlzylindrischen Hülsenkörper bzw. gespaltenen hohlzylindrischen Hülsenkörper mit mindestens zwei rinnenähnlichen Schalenelementen. Diese weisen jeweils ein Kopfende und ein Hinterende auf (bezogen auf die Längsachse der Hülse) und sind symmetrisch um eine zentrale Mittenachse A gruppiert. Sie spannen zwischen sich einen Zwischenraum auf mit zueinander orientierten Innenoberflächen. Die Schalenelemente sind dabei voneinander beabstandet angeordnet und durch achsparallele Längsschlitze separiert, bis auf einen verbindenden Gelenkabschnitt, welcher am Kopfende angeordnet ist. Die Formulierung "hohlzylindrischer Hülsenkörper" ist so gemeint, dass die Grundform der Hülse, von aussen betrachtet, von einem Hohlzylinder gebildet wird, dessen Zylinderwand mindestens zwei Längsschlitze aufweist, die bis in den Zwischenraum reichen. Die Schalenelemente bilden dabei den Grossteil der Hülse, wobei sie am Kopfende vom Gelenkabschnitt verbunden werden. Zwei Schalenelemente (also im Wesentlichen Halbschalen) haben sich als für die Funktion ausreichend erwiesen, die Erfindung würde jedoch auch mit einem aus 3, 4 oder mehr Schalenelementen gebildeten Hülsenkörper funktionieren. Eine Mehrteiligkeit kann insbesondere bei grossen Hülsendurchmessern Vorteile haben.

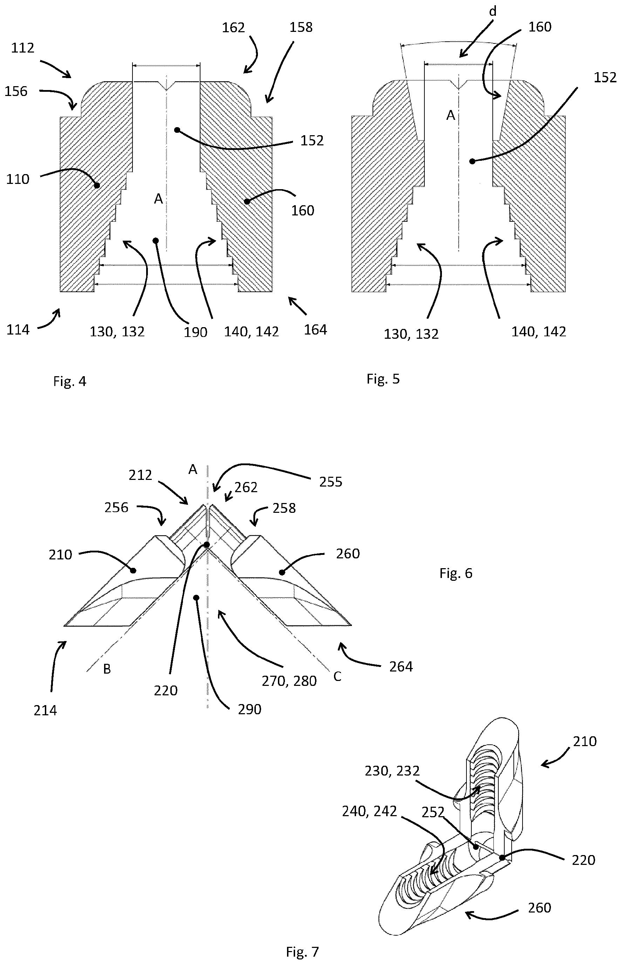

Mit "gespalten hohlzylindrischem Hülsenkörper" ist eine Bauform gemeint, deren Schalenkörper-Design im Wesentlichen der Bauform beim normalen, oben beschriebenen Hülsenkörper folgt; die also insbesondere am Gelenkabschnitt miteinander verbunden sind, aber aufgeklappt wurden. Der Spreizwinkel, bezogen von einem Schalenelement auf die Mittenachse der Hülse kann bevorzugt 15° bis 45° einnehmen. Figur 6 und 7 illustrieren exemplarisch diese Ausführungsform einer solchen Hülse mit 2x45° Spreizwinkel. Klappt man die Schalenkörper zusammen (Schwenkbewegung um den Gelenkabschnitt) wird die Hülsenform wieder erreicht. Im Abschnitt über die Verwendung der Hülse wird der Grund für diese Auslegung weiter erläutert.

Ferner ist es von Vorteil, wenn der von den Innenoberflächen der rinnenähnlichen Schalenelemente aufgespannte Zwischenraum im Wesentlichen eine Trichterform aufweist mit zum Hinterende hin sich aufweitenden Durchmesser. Diese Trichterform kann einerseits dadurch erzielt werden, dass die Hülse zwar in der Aussenform zylindrisch bzw. zylinderähnlich ausgelegt ist, der Zwischenraum dagegen von der Zylinderform zugunsten einer konischen Wandung abweicht. Beim "gespalten hohlzylindrischem Hohlkörper wird die Trichterform durch das Aufklappen der Schalenelemente erreicht oder unterstützt.

Insbesondere bevorzugt werden die Innenoberflächen der rinnenähnlichen Schalenelemente eine treppenförmig gestufte oder gerippte Oberfläche aufweisen. Im Anwendungsteil wird darauf näher eingegangen. Diese gerippte Oberfläche kann auch schräg so angeordnet werden, insbesondere so dass ein helixförmiger (Innen-)Gewindegang entsteht. Die Textur ist nicht auf Rippen oder Stufen beschränkt, sie kann auch gerändelt, genoppt oder unregelmässig texturiert sein.

Wie oben beschrieben, weist eine Hülse gemäss Erfindung achsparallele Längsschlitze auf. Von aussen betrachtet kann bevorzugt so ein Längsschlitz eine Keilform aufweisen, die sich vom Kopfende zum Hinterende hin aufweitet.

Bei einer erfindungsgemässen Hülse kann ferner der Gelenkabschnitt als Materialbrücke ausgeführt werden mit einer Sollknickstelle. Diese Ausführungsform ist fertigungstechnisch einfach zu realisieren. Durch die Sollknickstelle wird die Gelenkfunktion an der zugedachten Stelle sichergestellt. Die Sollknickstelle kann bevorzugt als Kerbe, Verengung oder Einschnürung ausgeführt werden.

In einer weiteren Ausführungsform weist die Hülse bzw. deren Innenraum im Bereich des Gelenkabschnittes bzw. benachbart zum Kopfende eine Verengung auf in Form eines innen kreisrunden Rohrabschnittes mit Durchmesser d. Umgangssprachlich würde man von einem Flaschenhals sprechen. Die Funktionalität wird weiter unten erläutert. In einer nützlichen Variante kann sich an die Verengung, zum Kopfende hin, eine trichterförmige Aufweitung anschliessen.

Die Hülse kann, speziell im Bereich der Verengung oder benachbart dazu, ein Klemmelement aufweisen. Dieses Klemmelement unterstützt die Klemmwirkung zwischen Hülse und Befestiger, indem sie zusätzlich ins Gewinde des Befestigers eingreifen kann. Dabei ist diese Klemmwirkung vor allem für die Zeit bis zum Einsatz, also bei Lagerung und Transport, vorteilhaft. Die Klemmwirkung kann durch eine die Verengung überspannende, dünne Membran realisiert werden. Sie kann teilweise durchbrochen ausgeführt werden, also beispielsweise mit einem Schlitz oder einer Mittenöffnung. Alternativ können eine Mehrzahl von fingerförmigen Halteelementen vorgesehen werden, die in die Verendung hineinragen und den vorgenannten Eingriff in das Gewinde des Befestigers erlauben.

Der Hülsenkörper weist am Vorderende eine rückversetzte Anschlagfläche oder mehrere, eine Anschlagfläche bildende Flächen (156, 158, 256, 258) auf. Rückversetzt ist dabei so zu verstehen, dass Teile des Hülsenkörpers über die Anschlagfläche(n) hinausragen. Wie weiter unten erläutert, unterstützen diese Flächen bei der Montage die sichere Zentrierung und Führung.

Hülsen der beschriebenen Art lassen sich als Spritzgiesselemente oder Formpresselemente in Massen einfach fertigen. Als Material ist besonders geeignet Kunststoff, insbesondere ein biologisch abbaubarer Kunststoff, gepresstes und/oder gebundenes Fasermaterial, insbesondere auf Basis von Zellulose, (recycelten) Papierfasern Pflanzenfasern oder ein Materialmix bzw. Verbundwerkstoff aus den vorgenannten und weiteren Stoffen. Nachdem die erfindungsgemässen Hülsen für den Einmalgebrauch gedacht sind und durch den Montagevorgang abgesprengt werden, ist ein Material, das nicht separat entsorgt werden muss, von Vorteil.

Ein erfindungsgemässes Verfahren zur Befestigung eines Fassadenelementes an der Unterkonstruktion einer Gebäudehülle umfasst folgende Schritte:
a) Das Bereitstellen eines Befestigers mit einem Kopf mit einem Kraftangriff, einem Schaft mit Gewinde und einer Spitze. Die Schraube ist vorteilhaft selbstbohrend bzw. selbstschneidend ausgelegt. Die Spitze wird dann als Bohrspitze oder Verdrängerspitze ausgelegt sein. Auf diese Spitze des Befestigers wird eine erfindungsgemässe Hülse aufgesteckt. Die Hülse sitzt klemmend auf der Spitze bzw. dem dort u.U. vorgesehenen Gewinde oder auf einem spitzennahen Gewindeabschnitt. Der Klemmsitz erfolgt im Bereich des Kopfendes bzw. der Verengung. Dazu wird der Durchmesser d der Verengung kleiner sein als der Gewindeaussendurchmesser des Befestigers.
b) Der Befestiger wird in eine dafür vorgesehene Vorbohrung des besagten Fassadenelementes angesetzt dergestalt, dass die zurückversetzten Anschlagfläche(n) auf der Oberfläche des Fassadenelementes anliegen. Dadurch wird eine genaue Zentrierung des Befestigers im Bohrloch erzielt.
c) Nun erfolgt das Andrücken der Hülse an die Vorbohrung, sodass die Innenoberflächen zumindest abschnittsweise in Berührung mit dem Gewinde am Schaft des Befestigers kommen. Das Andrücken bewirkt, dass die konisch zulaufenden Innenoberflächen der Hülse begünstigt durch den Gelenkabschnitt an das Schaftgewinde anklappen bzw. angedrückt werden.
d) Wird nun der Befestiger angetrieben...
e) senkt sich der Befestigers in die Vorbohrung ein bis die Spitze des Befestigers die Unterkonstruktion erreicht. Bis dahin wird die Führung (Zentrierung in der Vorbohrung des Fassadenelementes) durch die Hülse bewirkt bzw. erleichtert.
f) Die Schalenelemente werden automatisch aus der Vorbohrung des Fassadenelementes ausgeworfen, allein durch das Antreiben des Befestigers, sobald die Zentrierung gewährleistet ist. Der Grund dafür ist ein durch die erfinderische Hülse bewirktes Zusammenspiel des Schraubengewindes und der inneren Oberflächen der Hülse. Solange die Spitze des Befestigers Unterkonstruktion nicht erreicht hat, wird der Anpressdruck des Monteurs über die Hülse auf die Fassadenplatte abgeleitet, was gleichzeitig die Hülse in der Vorbohrung hält. Die Steigung des Gewindes definiert (zusammen mit der Umdrehungszahl) den Vorschub des Befestigers. Berührt die Spitze die Unterkonstruktion, verringert sie unmittelbar diese Vorwärtsbewegung, weil zuerst das Material der Unterkonstruktion durchbohrt werden muss. Da sich der Befestiger jedoch weiterdreht, werden die Hülsenelemente durch das Gewinde aus der Vorbohrung verdrängt. Dies geschieht automatisch in dem Moment, wo die Bohrspitze sich zentriert hat und die Hülse ihre Funktion erfüllt hat. Damit wird die ...
g) Fertigstellung der Befestigung erreicht, wobei kein Rest der Hülse im Verbund Befestiger - Fassadenelement - Unterkonstruktion verbleibt.

Die aus dem Stand der Technik teilweise bekannten Probleme - Verbleib einer Hülse zu lange in der Vorbohrung (Gefahr des Einklemmens bzw. Einquetschens) oder Auswerfen aus der Vorbohrung bevor die Zentrierung in der Unterkonstruktion erreicht wurde, lassen sich vermeiden.

Versuche haben ergeben, dass durch das Andrücken der Hülse an den Rand der Vorbohrung (Schritt c) oben) es vorkommen kann, dass der Gelenkabschnitt aufbricht. Dies wird durch eine Trichterform des Innenraums sogar begünstigt. Der Andruck des Befestigers, auch während dieser angetrieben wird, reicht allerdings aus, um die beiden getrennten Hälften in der Vorbohrung zu stabilisieren. Ist die Zentrierwirkung wie oben beschrieben erfüllt, werden auch die aufgebrochenen Hälften sicher ausgeworfen.

### BESCHREIBUNG DER FIGUREN

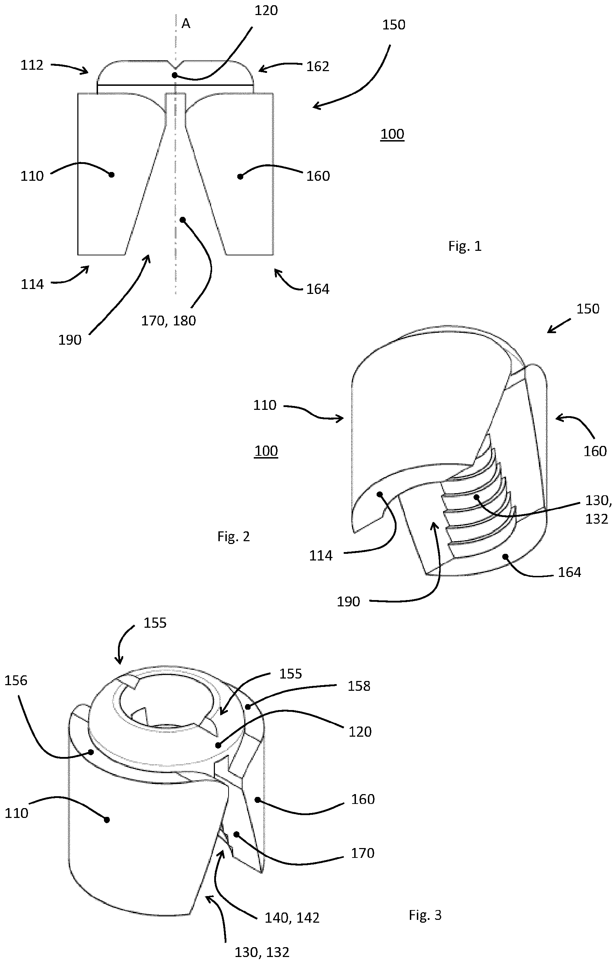

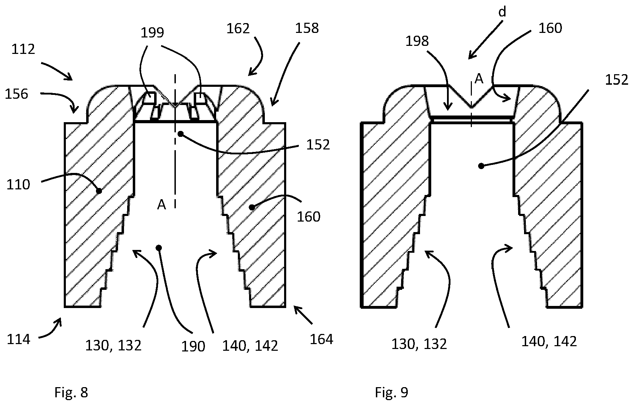

Die Figuren 1 bis 5 zeigen eine erste Ausführungsform der Erfindung, teilweise ergänzt um bevorzugte Merkmale. Figur 1 ist eine Seitenansicht, die Figuren 2 und 3 je eine perspektivische Sicht und die Figuren 4 und 5 Längsschnitte durch eine erfindungsgemässe Hülse. Die Figuren 8 und 9 zeigen ein Zusatzmerkmal. Wegen der Übereinstimmungen werden die Figuren 1 - 3 gemeinsam erläutert.

Eine Hülse 100 ist als im Wesentlichen hohlzylindrischer Hülsenkörper 150 gezeigt. Er umfasst hier zwei rinnenähnlichen Schalenelemente 110, 160 mit ihrem Kopfende 112, 162 bzw. Hinterende 114, 164. Die zentrale Mittenachse A markiert die zentrale Symmetrieachse des zylindrischen Körpers. Die zwei rinnenähnlichen Schalenelemente 110, 160 sind so gruppiert, dass ihre Aussenflächen die Zylinderaussenform definieren. Die beiden Schalenelemente 110, 160 werden durch zwei achsparallele Längsschlitze 170, 180 separiert. Die Schalenelemente begrenzen einen Zwischenraum 190, die zueinander orientierten Innenflächen sind mit 130 und 140 gekennzeichnet. Der Gelenkabschnitt 120 am Kopfende 112, 162 verbindet die beiden Schalenelemente über eine Materialbrücke. Diese kann eine Sollknickstelle 155 aufweisen, hier gezeigt in Form einer Kerbe.

Figur 2 zeigt in der perspektivischen Sicht das Hinterende 114, 164 und den Zwischenraum 190. Deutlich erkennbar ist, dass die Innenoberfläche 130 eine treppenförmig gestufte oder gerippte Oberfläche 132 aufweist.

Figuren 1 bis 3 illustrieren, dass der Zwischenraum 190 im Wesentlichen eine Trichterform besitzt mit zum Hinterende 114, 164 hin sich ausweitendem Durchmesser. Ebenso ist erkennbar, dass die Längsschlitze 170, 180 von aussen betrachtet eine Keilform aufweisen. Sie weiten sich vom Kopfende 112, 162 hin zum Hinterende 114, 164 auf.

Ferner ist gut erkennbar, dass die Hülse 100 am Vorderende 112, 162 eine rückversetzte Anschlagfläche 156, 158 besitzt. Sie ist hier zweigeteilt auf beide Schalenelemente 110, 160 verteilt. Zusammen betrachtet bilden die Flächen eine ringförmige Anschlagfläche. Der zum Vorderende 112, 162 überragende Teil der Hülse hat beim Einstecken in eine Vorbohrung eine entsprechende zentrierende Funktion. Der Innendurchmesser der Anschlagfläche wird daher so ausgelegt, dass er dem Vorbohrdurchmesser der Fassadenplatte entspricht.

In den Figuren 4 und 5 haben dieselben Referenzzeichen dieselbe Bedeutung wie in den Figuren 1-3. Figur 4 zeigt einen Querschnitt, der den trichterförmigen Zuschnitt des Innenraums 190 illustriert. Ferner ist die Innenoberfläche 130, 140 als treppenförmig gestufte oder gerippte Oberfläche 132, 142 gut zu erkennen. Erkennbar ist die Verengung 152 in Form eines innen kreisrunden Rohrabschnittes mit Durchmesser d, die die engste Stelle des Innenbereichs der Hülse darstellt und einem eingesteckten Befestiger als unmittelbare Klemmfläche dient.

In der Variante von Figur 5 schliesst sich an die Verengung 152 zum Kopfende hin eine trichterförmige Aufweitung 154 an.

Die Figuren 8 und 9 sind an die Figuren 4 und 5 angelehnt. Sie wurden ergänzt um das Merkmal "Klemmelement", das in zwei exemplarischen Varianten 198 und 199 eingefügt wurde. Das Klemmelement ergänzt die durch die Verengung 152 erzielte Klemmwirkung zusätzlich. Während ein eingesteckter Befestiger in der Verengung überwiegend durch Reibung gehalten wird, kann ein zusätzliches Element wie eine Membran 198, eine teilweise durchbrochene Membran bzw. fingerförmige Halteelemente 199, diesen Effekt verstärken, indem diese Elemente verriegelnd bzw. rastend in das Gewinde des Befestigers eingreifen.

Die Membran wird beim Aufstecken der Hülse auf den Befestiger durchstossen und passt sich dabei der Aussenkontur des Gewindes an. Sie bildet also einen Schutz vor Herausfallen. Die als Alternative dargestellten fingerförmigen Halteelemente 199 sind bevorzugt in Mehrzahl ausgebildet und symmetrisch um die Mittenachse A herum angeordnet. Wie beschrieben, wird das Klemmelement so ausgelegt, dass es die Haltefunktion sicher erfüllen kann, jedoch das Setzen des Befestigers und die Zentrierwirkung der Hülse nicht verschlechtert.

In der Figuren 6 und 7 ist die Hülsenvariante "gespaltener hohlzylindrischen Hülsenkörper" 250 gezeigt. Sie besitzt ebenfalls mindestens zwei rinnenähnliche Schalenelemente 210, 260, wobei diese ebenfalls ein Kopfende 212, 262 und ein Hinterende 214, 264 aufweisen. Die Mittenachse A ist in Figur 6 gezeigt. Der Innenraum 290 ist durch die aufgeklappten Innenoberflächen 230, 240 umrissen, er ist trichterförmig vom Vorderende 212, 262 zum Hinterende 214, 264.

Die achsparallelen Längsschlitze 270, 280 lassen sich visualisieren als die Fläche, die in etwa durch die Linien B und C in Figur 6 begrenzt wird. Sie besitzen die in Figur 6 gut erkennbare Trichter- oder Keilform. Der Gelenkabschnitt 220 ist in Figur 6 und 7 gezeigt. Figur 7 zeigt die treppenförmig gestufte oder gerippte Oberfläche 232, 242 der Innenoberflächen 230, 240 der rinnenähnlichen Schalenelemente 210, 260.

Auch diese Ausführungsvariante weist einen Gelenkabschnitt 220 auf, der als Materialbrücke ausgeführt ist mit einer Sollknickstelle 255.

Die rückversetzten Anschlagflächen 256, 258 sind bei dieser Ausführungsvariante als sehr schmale Auflagestreifen ausgeführt.

## Patentansprüche

1. Hülse (100, 200) zur Zentrierung von Befestigern bei der Montage von Bauteilen an der Unterkonstruktion einer Gebäudehülle; wobei die Hülse einen im Wesentlichen hohlzylindrischen Hülsenkörper (150) bzw. gespaltenen hohlzylindrischen Hülsenkörper (250) umfasst mit mindestens zwei rinnenähnlichen Schalenelementen (110, 160, 210, 260), wobei diese
- jeweils ein Kopfende (112, 162, 212, 262) und ein Hinterende (114, 164, 214, 264) aufweisen;
- symmetrisch um eine zentrale Mittenachse A gruppiert und
- zwischen sich einen Zwischenraum (190, 290) aufspannen mit zueinander orientierten Innenoberflächen (130, 140, 230, 240); und
- der Hülsenkörper (150, 250) am Vorderende (112, 162, 212, 262) eine rückversetzte Anschlagfläche oder mehrere, eine Anschlagfläche bildende Flächen (156, 158, 256, 258) aufweist
**dadurch gekennzeichnet, dass** die Schalenelemente voneinander beabstandet angeordnet und durch achsparallele Längsschlitze (170, 180, 270, 280) separiert sind bis auf einen verbindenden Gelenkabschnitt (120, 220), der am Kopfende (112, 162, 212, 262) angeordnet und dazu ausgebildet ist, beim Eintreiben des Befestigers aufgebrochen zu werden.

2. Hülse (100, 200) nach Anspruch 1, **dadurch gekennzeichnet, dass** der von den Innenoberflächen (130, 140, 230, 240) der rinnenähnlichen Schalenelemente (110, 160, 210, 260) aufgespannte Zwischenraum (190, 290) im Wesentlichen eine Trichterform aufweist mit zum Hinterende (114, 164, 214, 264) hin sich aufweitenden Durchmesser

3. Hülse (100, 200) nach Anspruch 1-2, **dadurch gekennzeichnet, dass** die Innenoberflächen (130, 140, 230, 240) der rinnenähnlichen Schalenelemente (110, 160, 210, 260) eine treppenförmig gestufte oder gerippte Oberfläche (132, 142, 232, 242) aufweisen.

4. Hülse (100, 200) nach Anspruch 1-3, **dadurch gekennzeichnet, dass** ein Längsschlitz (170, 180, 270, 280) von aussen betrachtet eine Keilform aufweist, die sich vom Kopfende (112, 162, 212, 262) zum Hinterende (114, 164, 214, 264) hin aufweitet.

5. Hülse (100, 200) nach Anspruch 1-4, **dadurch gekennzeichnet, dass** der Gelenkabschnitt (120, 220) als Materialbrücke ausgeführt ist mit einer Sollknickstelle (155, 255).

6. Hülse (100, 200) nach Anspruch 1-5, **dadurch gekennzeichnet, dass** der Innenraum (190, 290) im Bereich des Gelenkabschnittes (120, 220) bzw. benachbart zum Kopfende (112, 162, 212, 262) eine Verengung (152, 252) aufweist in Form eines innen kreisrunden Rohrabschnittes mit Durchmesser d.

7. Hülse (100, 200) nach Anspruch 5, **dadurch gekennzeichnet, dass** die Sollknickstelle (155, 255) als Kerbe, Verengung, Einschnürung ausgeführt ist.

8. Hülse (100) nach Anspruch 6, **dadurch gekennzeichnet, dass** sich an die Verengung (152), zum Kopfende hin, eine trichterförmige Aufweitung (154) anschliesst.

9. Hülse (100, 200) nach Anspruch 6, **dadurch gekennzeichnet, dass** die Hülse (100, 200) im oder benachbart zum Bereich der Verengung (152, 252) ein Klemmelement (198, 199) aufweist in Form einer Membran (198), einer teildurchbrochenen Membran bzw. fingerförmigen Haltelementen (199).

10. Hülse (100, 200) nach Anspruch 1-9, **dadurch gekennzeichnet, dass** die Hülse (20) ein einstückiges Spritzgiesselement oder Formpresselement ist.

11. Hülse (100, 200) nach Anspruch 1-10, **dadurch gekennzeichnet, dass** das Material der Hülse (100, 200) einen Kunststoff, ein biologisch abbaubarer Kunststoff bzw. gebundene Papierfasern, Pflanzenfasern, oder andere Verbundwerkstoffe umfasst.

12. Verfahren zur Befestigung eines Fassadenelementes an der Unterkonstruktion einer Gebäudehülle, mit den folgenden Schritten:
a) Bereitstellen eines Befestigers mit einem Kopf mit einem Kraftangriff, einem Schaft mit Gewinde und einer Spitze, mit einer auf die Spitze des Befestigers aufgesteckten Hülse (100, 200) gemäss Anspruch 1-11;
b) Ansetzen des Befestigers in eine dafür vorgesehene Vorbohrung des besagten Fassadenelementes dergestalt, dass die flanschartigen Anschlagflächen (156, 158, 256, 258) auf der Oberfläche des Fassadenelementes anliegen
c) Andrücken der Hülse (100, 200) an die Vorbohrung, sodass die Innenoberflächen (130, 140, 230, 240) zumindest abschnittsweise in Berührung kommen mit dem Gewinde am Schaft des Befestigers;
d) Antreiben der Befestigers;
e) Einsenken des Befestigers in die Vorbohrung bis die Spitze des Befestigers die Unterkonstruktion erreicht, wobei durch die Hülse (100, 200) eine Zentrierung in der Vorbohrung des Fassadenelementes erzielt wird;
f) Selbsttätiges Auswerfen der Schalenelemente (110, 160, 210, 260) aus der Vorbohrung des Fassadenelementes durch das Antreiben des Befestigers, sobald die Zentrierung gewährleistet ist;
g) Fertigstellung der Befestigung wobei kein Rest der Hülse (100, 200) im Verbund Befestiger - Fassadenelement - Unterkonstruktion verbleibt.

## Claims

1. Sleeve (100, 200) for centering fasteners when assembling components to the substructure of a building envelope; wherein the sleeve comprises a substantially hollow-cylindrical sleeve body (150) or split hollow-cylindrical sleeve body (250) having at least two channel-like shell elements (110, 160, 210, 260), wherein the latter
- each have a head end (112, 162, 212, 262) and a tail end (114, 164, 214, 264);
- are grouped symmetrically about a central mid-axis A, and
- define an intermediate space (190, 290) therebetween with inner surfaces (130, 140, 230, 240) oriented toward each other; and
- the shell elements (150, 250) have at the front end (112, 162, 212, 262) a recessed abutment surface or a plurality of surfaces (156, 158, 256, 258) forming an abutment surface,
**characterized in that** the shell elements are spaced apart and separated by axially parallel longitudinal slots (170, 180, 270, 280) except for a connecting joint section (120, 220) arranged at the head end (112, 162, 212, 262) and adapted to be broken open when the fastener is driven in.

2. Sleeve (100, 200) according to claim 1, **characterized in that** the intermediate space (190, 290) defined by the inner surfaces (130, 140, 230, 240) of the channel-like shell elements (110, 160, 210, 260) has substantially a funnel shape with a diameter widening towards the rear end (114, 164, 214, 264).

3. Sleeve (100, 200) according to claim 1-2, **characterized in that** the inner surfaces (130, 140, 230, 240) of the channel-like shell elements (110, 160, 210, 260) have a stepped or ribbed surface (132, 142, 232, 242).

4. Sleeve (100, 200) according to claim 1-3, **characterized in that** a longitudinal slot (170, 180, 270, 280), as viewed from the outside, has a wedge shape that widens from the head end (112, 162, 212, 262) toward the rear end (114, 164, 214, 264).

5. Sleeve (100, 200) according to claim 1-4, **characterized in that** the joint section (120, 220) is designed as a material bridge with a predetermined bending point (155, 255).

6. Sleeve (100, 200) according to claim 1-5, **characterized in that** the inner space (190, 290) in the region of the joint section (120, 220) or adjacent to the head end (112, 162, 212, 262) has a constriction (152, 252) in the form of an internally circular tube section with diameter d.

7. Sleeve (100, 200) according to claim 5, **characterized in that** the predetermined bending point (155, 255) is designed as a notch, constriction, necking.

8. Sleeve (100) according to claim 6, **characterized in that** a funnel-shaped widening (154) adjoins the constriction (152) towards the head end.

9. Sleeve (100, 200) according to claim 6, **characterized in that** the sleeve (100, 200) has, in or adjacent to the region of the constriction (152, 252), a clamping element (198, 199) in the form of a diaphragm (198), a partially perforated diaphragm or finger-shaped retaining elements (199).

10. Sleeve (100, 200) according to claim 1-9, **characterized in that** the sleeve (20) is an integral injection-molding element or compression-molding element.

11. Sleeve (100, 200) according to claim 1-10, **characterized in that** the material of the sleeve (100, 200) comprises a plastic, a biodegradable plastic or bonded paper fibers, plant fibers, or other composite materials.

12. Method for fastening a facade element to the substructure of a building envelope, comprising the following steps:
a) providing a fastener having a head with a power grip, a shank with thread and a tip, having a sleeve (100, 200) fitted to the tip of the fastener according to claim 1-11;
b) inserting the fastener into a pre-drilled hole of said facade element in such a way that the flange-like abutment surfaces (156, 158, 256, 258) rest against the surface of the facade element;
c) pressing the sleeve (100, 200) against the pre-drilled hole so that the inner surfaces (130, 140, 230, 240) come into contact, at least in sections, with the thread on the shank of the fastener;
d) driving the fastener;
e) sinking the fastener into the pre-drilled hole until the tip of the fastener reaches the substructure, wherein a centering in the pre-drilled hole of the facade element is achieved by the sleeve (100, 200);
f) automatic ejection of the shell elements (110, 160, 210, 260) from the pre-drilled hole of the facade element by driving the fastener once centering is ensured;
g) completion of the fastening, leaving no residue of the sleeve (100, 200) in the composite of fastener - facade element - substructure.

## Revendications

1. Douille (100, 200) pour le centrage de fixations lors du montage d'éléments de construction sur l'ossature d'une enveloppe de bâtiment ; la douille comprenant un corps de douille (150) essentiellement cylindrique creux ou un corps de douille (250) cylindrique creux fendu avec au moins deux éléments de coque (110, 160, 210, 260) semblables à des gouttières, ces éléments de coque (110, 160, 210, 260)
- présentent chacun une extrémité de tête (112, 162, 212, 262) et une extrémité arrière (114, 164, 214, 264) ;
- regroupés symétriquement autour d'un axe central A et
- définissent entre eux un espace intermédiaire (190, 290) avec des surfaces intérieures (130, 140, 230, 240) orientées les unes vers les autres ; et
- le corps de douille (150, 250) présente à l'extrémité avant (112, 162, 212, 262) une surface de butée en retrait ou plusieurs surfaces (156, 158, 256, 258) formant une surface de butée
**caractérisée en ce que** les éléments de coque sont espacés les uns des autres et séparés par des fentes longitudinales (170, 180, 270, 280) parallèles à l'axe, à l'exception d'une section d'articulation de connexion (120, 220) située à l'extrémité de tête (112, 162, 212, 262) et adaptée pour être rompue lors de l'enfoncement de la fixation.

2. Douille (100, 200) selon la revendication 1, **caractérisée en ce que** l'espace intermédiaire (190, 290) défini par les surfaces intérieures (130, 140, 230, 240) des éléments de coque (110, 160, 210, 260) semblables à des gouttières présente essentiellement une forme d'entonnoir avec un diamètre s'élargissant en direction de l'extrémité arrière (114, 164, 214, 264)

3. Douille (100, 200) selon les revendications 1 à 2, **caractérisée en ce que** les surfaces intérieures (130, 140, 230, 240) des éléments de coque (110, 160, 210, 260) semblables à des gouttières présentent une surface (132, 142, 232, 242) étagée ou nervurée en forme d'escalier.

4. Douille (100, 200) selon les revendications 1 à 3, **caractérisée en ce qu'**une fente longitudinale (170, 180, 270, 280) présente, vue de l'extérieur, une forme de coin qui s'élargit de l'extrémité de tête (112, 162, 212, 262) vers l'extrémité arrière (114, 164, 214, 264).

5. Douille (100, 200) selon les revendications 1 à 4, **caractérisée en ce que** la section d'articulation (120, 220) est réalisée sous forme de pont de matériau avec un point de flambage théorique (155, 255).

6. Douille (100, 200) selon les revendications 1 à 5, **caractérisée en ce que** l'espace intérieur (190, 290) présente, dans la zone de la section d'articulation (120, 220) ou à proximité de l'extrémité de tête (112, 162, 212, 262), un rétrécissement (152, 252) sous forme d'une section de tube circulaire à l'intérieur avec un diamètre d.

7. Douille (100, 200) selon la revendication 5, **caractérisée en ce que** le point de flambage théorique (155, 255) est réalisé sous la forme d'une encoche, d'un rétrécissement, d'une constriction.

8. Douille (100) selon la revendication 6, **caractérisée en ce qu'**un élargissement (154) en forme d'entonnoir se raccorde au rétrécissement (152) en direction de l'extrémité de tête.

9. Douille (100, 200) selon la revendication 6, **caractérisée en ce que** la douille (100, 200) présente, dans la zone du rétrécissement (152, 252) ou à proximité de celle-ci, un élément de serrage (198, 199) sous la forme d'une membrane (198), d'une membrane partiellement percée ou d'éléments de retenue (199) en forme de doigts.

10. Douille (100, 200) selon les revendications 1 à 9, **caractérisée en ce que** la douille (20) est un élément moulé par injection ou un élément moulé par compression d'une seule pièce.

11. Douille (100, 200) selon les revendications 1 à 10, **caractérisée en ce que** le matériau de la douille (100, 200) comprend une matière plastique, une matière plastique biodégradable ou des fibres de papier ou des fibres végétales liées ou d'autres matériaux composites.

12. Procédé de fixation d'un élément de façade à l'ossature d'une enveloppe de bâtiment, comprenant les étapes suivantes :
a) fournir une fixation ayant une tête avec une prise de force, une tige avec un filetage et une pointe, avec une douille (100, 200) selon les revendications 1 à 11 enfilée sur la pointe de la fixation ;
b) placer la fixation dans un avant-trou prévu à cet effet dudit élément de façade, de telle sorte que les surfaces de butée (156, 158, 256, 258) en forme de bride reposent sur la surface de l'élément de façade
c) presser la douille (100, 200) contre l'avant-trou, de sorte que les surfaces intérieures (130, 140, 230, 240) entrent en contact, au moins par sections, avec le filetage sur la tige de la fixation ;
d) entraîner la fixation ;
e) enfoncer la fixation dans l' avant-trou jusqu' à ce que la pointe de la fixation atteigne l'ossature, un centrage dans l'avant-trou de l'élément de façade étant obtenu par la douille (100, 200) ;
f) éjecter automatiquement les éléments de coque (110, 160, 210, 260) hors de l'avant-trou de l'élément de façade en entraînant la fixation dès que le centrage est assuré ;
g) réaliser la finition de la fixation, aucun reste de la douille (100, 200) ne restant dans l'ensemble fixation - élément de façade - ossature.
